# EUROPÄISCHE PATENTSCHRIFT

(11) **EP 2 886 006 B1**
(45) Veröffentlichungstag und Bekanntmachung des Hinweises auf die Patenterteilung: **06.02.2019**
(21) Anmeldenummer: 14004317.5
(22) Anmeldetag: 19.12.2014
(51) Int. Cl.: A45F 3/00, A01G 20/43, A45F 3/08, A45F 3/10, A45F 3/14, B25F 5/00

(54) **Tragesystem für modulare Batterieeinheit**
Support system for modular battery unit
Système de support pour batterie modulaire

(30) Priorität: 21.12.2013 DE 202013011447 U
(43) Veröffentlichungstag der Anmeldung: 24.06.2015
(73) Patentinhaber: Chervon (HK) Limited, Hong Kong 999077 (CN)
(72) Erfinder: Fischer, Victor, 61476 Kronberg (DE)
(74) Vertreter: Sun, Yiming

(56) Entgegenhaltungen:
- EP-A1- 2 565 961
- WO-A1-2013/139371
- FR-A1- 2 907 323
- GB-A- 2 229 487
- JP-A- 2011 216 304
- US-A1- 2009 071 990

## Beschreibung

### Hintergrund der Erfindung

Die vorliegende Erfindung betrifft eine tragbare Geräteeinheit, welche ein Gerät und eine Trageeinheit umfasst. Bei dem Gerät handelt es sich vorzugsweise um eine modulare Batterie- oder Akkumulatoreinheit. Mit dem Tragesystem kann diese Einheit dann am Körper, insbesondere auch auf dem Rücken getragen werden. Sie kann als Antrieb für eine Vielzahl von elektrischen Geräten genutzt werden. Dabei kann es sich beispielsweise um eine elektrische Bohrmaschine oder ein elektrisches Schleifgerät handeln. Besonders kommen aber Geräte in Betracht, welche im Freien verwendet werden, beispielsweise ein Rasentrimmer oder ein Laubgebläse.

Die Nutzung von Laubgebläsen ist immer verbreiteter und dagegen kommt das Laubfegen beinahe aus der Mode. Diese Laubgebläse sind aber häufig sehr laut, so dass ein besonderer Bedarf nach leisen Geräten entsteht. Eine neue Generation leiser Geräte wird von Elektromotoren und nicht mehr von Verbrennungsmotoren angetrieben. Diese leisen Geräte zu verwirklichen bedeutet jedoch hohe technische Hausforderungen in Bezug auf die Leistungsfähigkeit, Transportabilität und Handhabbarkeit der mobilen Stromversargungseinheit.

Die US-Patentanmeldung 2005/210624 A beschreibt ein tragbares Gebläse, welches von Batterien betrieben werden kann. Bei diesem Gebläse ist ein Batteriefach in das Gehäuse integriert. Das Gebläse soll aber wohl wohlwiegend Staub und nicht Laub wegblasen, so dass die angebotene Lösung für ein Laubgebläse hoher Leistung wenig geeignet erscheint.

Das US-Patent 6,006,400 offenbart ein elektrisches Gebläse, welches auf dem Rücken getragen werden kann. Dazu ist ein Gestell vorgesehen, welches sowohl eine Batterieeinheit als auch den Motor aufnimmt. Das Gestell selbst besteht aus einem gewinkelten Rahmen mit einem im Wesentlichen waagerecht und einem im Wesentlichen lotrecht verlaufenden Schenkel. An diesem Rahmen können die Batterieeinheit und können Motorteile angeschraubt werden. Diese recht solide erscheinende Ausführung scheint jedoch ergonomisch nicht vorteilhaft zu sein. Außerdem ist es schwer, die Batterieeinheit vom Rahmen abzunehmen, wodurch das System in Bezug auf das Laden oder das Austauschen der Batterie wenig flexibel erscheint.

Das US-Patent 6,105,206 offenbart ebenfalls ein tragbares elektrisch angetriebenes Gebläse. Hierbei ist ein Handtell vorgesehen, welches in einem Luftauslass endet. Das Handteil wird über ein elektrisches Kabel mit einem Rückenteil verbunden. Dieses Rückenteil ist nach Art eines Rucksacks gestaltet und kann Batterien aufnehmen.

Ein ähnlicher Ansatz wird in der US-Patentanmeldung 2013/0239361 A1 gewählt. Hier kann eine Batterieeinheit ebenfalls auf dem Rücken getragen werden. Dabei kommen zwei Schultergurte und ein Beckengurt zum Einsatz, Die Batterieeinheit wird fest von diesem Gurtsystem umschlossen. Das Lösen der Batterieeinheit von dem Gurtsystem wird nicht offenbart.

Folglich kann ein Auswechseln von Modulen oder ein Aufladen der Batterieeinheit nur dann geschehen, wenn mindestens die vollständige Batterieeinheit und das Gurtsystem zu einem Lade- oder Wechselpunkt transportiert werden. Dies erscheint als erheblicher Handhabungsnachteil, insbesondere auch deshalb, weil die Gurte dem sicheren Abstellen und der sicheren Handhabung der Batterieeinheit im Wege sein können. Beispielsweise ist gut denkbar, dass jemand beim Transport der Batterieeinheit über einen solchen Gurt stolpert. Ebenso erscheint fraglich, ob die Batterieeinheit sicher auf dem Boden oder einem Tisch aufgestellt werden kann oder ob hierbei das Gurtsystem im Wege ist.

Das Dokument WO2013/139371 offenbart eine Geräteeinheit nach dem Oberbegriff des Anspruchs 1.

### Nähere Beschreibung der Erfindung

Die vorliegende Erfindung möchte eine verbesserte tragbare Geräteeinheit anbieten, welche ein Gerät und eine Trageeinheit umfasst. Dabei sollen Gerät und Trageeinheit sicher verbunden werden können. Wenn als Gerät eine modulare Batterieeinheit gewählt wird, so soll eine gute und sichere und ergonomisch vorteilhafte Handhabung der in der Regel schweren Batterieeinheit erreicht werden Insbesondere soll dies auch bei einer modularen Batterieeinheit erreicht werden, also einer Batterieeinheit, welche aus einer kleineren oder größeren Vielzahl von Zellen bestehen kann und bei welcher sich der Schwerpunkt der Einheit mit der Zellenzahl und Zellenanordnung ändern kann. (Dies gilt für nicht ladbare Batterieeinheiten und ebenso für ladbare, welche hierin aus auch Akkumulatoreinheiten bezeichnet werden.)

Diese Ziele werden durch eine tragbare Geräteeinheit nach Anspruch 1 erreicht wie auch durch ein Verfahren nach Anspruch 13.

Nach der vorliegenden Erfindung umfasst die tragbare Geräteeinheit ein Gerät und eine Trageeinheit. Gerät und Trageeinheit sind miteinander verbindbar. Die beiden Einheiten sind auch voneinander lösbar. Die Trageeinheit weist mindestens eine Gleitplatte und mindestens einen Tragegurt auf. Mit diesem Tragegurt kann die Gleitplatte getragen werden. Bei dem Tragegurt kann es sich beispielsweise um einen Schultergurt oder um einen Beckengurt handeln. Ein einzelner Schultertragegurt kann genügen, um das Gerät mit einem gerade oder einem diagonal über die Körpermitte verlaufenden Gurt zu tragen. Vorteilhaft ist es, zwei Tragegurte vorzusehen, so dass das Gerät nach Art eines Rucksacks mit beiden Schultern getragen werden kann. Die Gleitplatte befindet sich dann auf dem Rücken des Trägers. Gerade in Kombination mit zwei Tragegurten ist ein zusätzlicher Beckengurt nützlich.

Bei der Gleitplatte handelt es sich um ein Element, welches das zweite Verbindungselement trägt. Die Bezeichnung Gleitplatte deutet darauf hin, dass es zweckmäßig ist, wenn das Gerät gleitend über die Platte geführt werden kann. Dazu ist eine insgesamt glatte Oberfläche der Platte vorteilhaft. Andere Ausführungen der Gleitplatte sind aber auch erfindungsgemäß.

An der Gleitplatte ist also mindestens ein Verbindungselement vorgesehen, welches nachfolgend als das zweite Verbindungselement bezeichnet wird. Korrespondierend mit dem zweiten Verbindungselement soll ein erstes Verbindungselement vorgesehen sein. Dieses erste Verbindungselement ist mit dem Gerät verbunden. Die Verbindungselemente werden dann als korrespondierend verstanden, wenn sie zum Zwecke einer Verbindung zusammenwirken können. Vorteilhafterweise werden mechanische Verbindungselemente verwendet. Dabei kann eines der Verbindungselemente ein männliches Element umfassen und das andere Verbindungselement ein das männliche Element umschließendes weibliches Element sein. Als männliches Verbindungselement käme etwa ein Zapfen in Frage, welcher in einer korrespondierenden Nut aufgenommen werden kann.

Im Sinne der vorliegenden Erfindung soll es mindestens eine Einschubrichtung geben, welche dazu geeignet ist, das Gerät mit der Trageeinheit zu verbinden. Mindestens in dieser einen Einschubrichtung kann das Gerät relativ zur Trageeinheit von einer Einschubposition in eine Stützposition und dann in eine Verbindungsposition gebracht werden. In der Einschubposition ist das Gerät noch nicht mit der Trageeinheit verbunden. Zweckmäßigerweise ist das Gerät aber schon so orientiert, dass seine Orientierung weitgehend der für die Verbindungsposition vorgesehenen Orientierung entspricht.

Die Stützposition wird als Übergangsposition bei einer Bewegung von der Einschubposition in die Verbindungsposition eingenommen. In dieser Stützposition ist das Gerät in mindestens einer Bewegungsrichtung nicht frei beweglich. Die Stützposition stellt also eine Position einer teilweisen Verbindung zwischen Gerät und Trageeinheit dar. Gerät und Trageeinheit sind noch nicht fest und einsatzbereit verbunden, jedoch auch nicht mehr frei in der Bewegung zueinander.

Dabei kann die Bewegung parallel zur Ebene der Gleitplatte gehemmt sein, so dass das Gerät parallel zu dieser Ebene nicht mehr frei beweglich ist. Alternativ oder zusätzlich kann das Gerät auch senkrecht zur Gleitplatte nicht mehr frei von der Gleitplatte weg beweglich sein.

Bei einem schweren Gerät führt das Vorsehen einer solchen Stützposition dazu, dass das Gerät besonders sicher mit der Trageeinheit verbunden werden kann. Etwa wenn wegen der Schwere des Gerätes die sichere Führung mit der freien Hand nicht gewährt ist, so ist in der Stützposition bereits eine unkontrollierte Bewegung oder ein Herabfallen des Gerätes gehemmt.

Vorteilhafterweise ist die Einschubrichtung des Gerätes von oben nach unten. Wenn das Gerät dann in der Stützposition nicht sicher geführt oder sogar losgelassen wird, kann die teilweise Hemmung der Bewegung des Gerätes in der Stützposition dazu führen und wird vorteilhafterweise dazu führen, dass das Gerät durch Schwerkrafteinwirkung in die Verbindungsposition überführt wird.

Gegenstand der vorliegenden Erfindung ist insofern auch ein Verfahren nach Anspruch 13 zur Verbindung eines Gerätes mit einer Trageeinheit zu einer Geräteeinheit, welches, vorzugsweise in dieser Reihenfolge, folgende Schritte umfasst:
- Bereitstellen eines Gerätes und einer Trageeinheit
- Bewegen des Gerätes entlang einer Einschubrichtung auf die Trageeinheit hin
- Überführen des Gerätes in eine Einschubposition, wobei das Gerät in der Einschubposition noch nicht mit der Trageeinheit verbunden ist
- Überführen des Gerätes von der Einschubposition in eine Stützposition, wobei das Gerät in der Stützposition in mindestens einer Bewegungsrichtung nicht frei beweglich ist
- Überführen des Gerätes von der Stützposition in eine Verbindungsposition, in welcher das Gerät einsatzbereit mit der Trageeinheit verbunden ist

Es ist zweckmäßig, die erste Verbindungseinheit so auszuführen, dass sie eine Grundplatte und eine erste und eine zweite hinterschnittene Seitenkante umfasst Eine solche Grundplatte mit hinterschnittenen Seitenkanten kann sozusagen als männliches Verbindungselement dienen, welches ähnlich einem Zapfen von einem weiblichen Verbindungselement umgriffen werden kann. Ein solches korrespondierendes Verbindungselement kann insbesondere die hinterschnittenen Seitenkanten umgreifen. Besonders vorteilhaft ist dabei, wenn die Seitenkanten in Einschubrichtung konisch aufeinander zulaufen. Die Seitenkanten legen dabei ein Dreieck fest, dessen Spitze in Einschubrichtung weist.

Es ist zweckmäßig, wenn das zweite Verbindungselement eine erste Führungsschiene und eine zweite Führungsschiene aufweist. Solche Führungsschienen können mit den Seitenkanten eines ersten Verbindungselementes zusammenwirken. Diese Führungsschienen können auch auf der Gleitplatte angebracht sein. Jede Führungsschiene weist dann ein gleitplattennahes und ein gleitplattenfernes Ende auf. Zweckmäßig ist, wenn der Abstand zwischen den gleitplattenfernen Enden geringer ist als zwischen den gleitplattennahen Enden. Die Führungsschienen sind dann besonders geeignet, ein anderes Element, beispielsweise hinterschnittene Seitenkanten zu umgreifen und so zu führen und zu fixieren.

Es ist ebenfalls zweckmäßig, wenn die beiden Führungsschienen in Einschubrichtung des Gerätes konisch aufeinander zulaufen. Die Orientierung der Führungsschienen sollte ggfs. auf entsprechende Seitenkanten abgestimmt sein. Eine formschlüssige Verbindung erfolgt also durch das Ineinandergreifen korrespondierender stumpfer Dreiecke.

Die Erfindung kann allgemein eine Trageeinheit umfassen, welche zwei Führungsschienen oder -kanten aufweist, welche konisch aufeinander zulaufen. Diese Führungsschienen oder - kanten können als Verbindungsmittel genutzt werden. Die Trageeinheit kann Teil einer tragbaren Geräteeinheit sein und durch andere hierin beschriebene Merkmale ergänzt werden.

Es ist zweckmäßig, den Einschubweg des Gerätes in Einschubrichtung durch einen Stützblock zu begrenzen. Das erste Verbindungselement, beispielsweise die Grundplatte, stößt dann gegen den Stützblock und findet an ihm sicheren Halt. Der Stützblock kann in der Verbindungsposition des Gerätes die Hauptlast des Gerätes übernehmen, wodurch die Verbindungselemente selbst entlastet werden.

Die Gleitplatte weist ferner ein Halteelement auf, welches die Entnahme des Gerätes gegen die Einschubrichtung hemmt. Das Halteelement umfasst eine federnd vorgespannte Haltenase. Diese Haltenase kann sich gegen das Gerät, beispielsweise eine Nut oder Vertiefung, im Gerät, drücken. Das Halteelement ist so auf der Halteplatte angeordnet, dass es im Durchgriffsbereich eines Tragegriffs des Gerätes liegt. Das Halteelement weist zur Bedienung ein Druckfeld auf, das im Durchgriffsbereich des Tragegriffes liegt. Unter dem Durchgriffsbereich eines Tragegriffes ist der Bereich zu verstehen, durch welchen die Fingerkuppen geführt werden, wenn das Gerät am Tragegriff aufgenommen werden soll. Bei entsprechender geometrischer Gestaltung werden in einer natürlichen Bewegung die Fingerkuppen auf das Halteelement, insbesondere auf das Druckfeld zugeführt. Damit kann in einer bequemen und ergonomisch vorteilhaften Bewegung bei der Entnahme das Halteelement mit den Fingerkuppen, betätigt und gelöst werden. Die beabsichtigte Entnahme wird dabei einfach und intuitiv, die unbeabsichtigte Entnahme aber unterdrückt. Insbesondere ist es so, dass eine unbeabsichtigte Betätigung dadurch vermieden wird, da zum Lösen des Halteelementes ein bewusstes Durchgreifen durch den Haltegriff erforderlich ist. Ein unbeabsichtigtes Lösen eines schweren Gerätes von der Trageeinheit, welche z.B. beim Vorbeugen des Trägers passieren könnte, wäre gefährlich und könnte Verletzungen verursachen.

Zweckmäßig ist, wenn die Geräteeinheit einen Querträger aufweist, an welchem Schultergurte oder der Beckengurt verankert sein können. Ein solcher Querträger hat sich als ergonomisch vorteilhaft erwiesen. Er kann einstückig mit der Gleitplatte ausgeführt sein oder er kann als separates Bauteil mit der Gleitplatte verbunden sein. Vorteilhaft ist es, wenn zwischen Querträger und Gleitplatte ein Gelenk vorgesehen ist. Der Querträger gibt dem Tragesystem Im unteren Bereich im Übrigen eine größere Breite. Dies führt dazu, dass das Gerät, auch wenn es nicht vom Tragesystem gelöst wird, besonders sicher am Boden gestellt werden kann. Dabei kann der Querträger oder ein mit dem Querträger verbundenes Element der Trageeinheit einen Standfuß oder ein Standelement für das Gerät anbieten. Dies ist besonders dann vorteilhaft, wenn am Gerät zwei weitere Standfüße vorgesehen sind. Wenn der Querträger zur Verankerung des Beckengurtes genutzt wird, ist es gut Elemente einzusetzen, welche eine Verankerung der Schultergurte seitlich versetzt zur Mittelachse ermöglicht. Solche Elemente können Ankerstege sein, die mit der Gleitplatte verbunden sind. Eine seitliche Versetzung von jeweils mindestens 5 cm, 10 cm oder 15 cm, aber nicht mehr als 25 cm ist günstig.

Es ist vorteilhaft, die Gleitplatte aus Kunststoff herzustellen. Die Herstellung aus Kunststoff erlaubt es beispielsweise, die erste Führungsschiene und die zweite Führungsschiene bequem einstückig mit der Gleitplatte auszuführen.

Es ist vorteilhaft, wenn das Gerät ein Akkumulatorblock ist. Zweckmäßig ist auch, wenn der Akkumulatorblock mehrere Akkumulatorzellen umfasst. Besonders zweckmäßig zur Verwendung mit der Trageeinheit ist ein Akkumulatorblock, der eine variable Anzahl von Zellen umfasst. Durch die variable Anzahl von Zellen kann sich der Akkumulatorblock relativ zum Gerät, also insbesondere relativ zu einem Gerätegehäuse verschieben. Dabei kann eine Kopflastigkeit des Gerätes entstehen, d. h. der Gewichtsschwerpunkt des Gerätes liegt oberhalb seines geometrischen Schwerpunktes. Insbesondere bei einem kopflastigen Gerät ist die sichere Halterung und Führung wichtig. Daher ist die erfindungsgemäße Geräteeinheit besonders für Akkumulatorblöcke mit einer variablen Anzahl von Akkumulatorzellen vorteilhaft. Unter einem Akkumulatorblöck wird hierin ein ladbare Energiespeichereinheit verstanden. Die beschiebenen Vorteile lassen sich aber auch erreichen, wenn ein nicht ladbarer modular aufgebauter Batterieblock verwendet wird.

Die Gestaltung der Unterseite des Gerätes stellt einen selbstständigen Aspekt der Erfindung dar. Es hat sich als vorteilhaft erwiesen, das Gehäuse des Gerätes, also z.B. eines Akkumulatorblocks, mit einem Boden auszustatten, über den gewisse Elemente jedoch hinausragen. Der Boden selbst kann in zweckmäßigerweise als Bedien- und Anschlussfeld gestaltet werden. Seitlich über dem Boden können Seitenwandabschnitte hinausragen. Diese Seitenwandabschnitte können dann auch als Standfüße gestaltet werden. Vorteilhaft ist es, wenn jedoch auf der dem Rücken abgewandten Seite des Gehäuses kein solcher Wandüberstand vorgesehen ist. Dann ist der Boden leichter zugänglich. Dementsprechend ist es dann leicht möglich, elektrische Kabel für einen Verbraucher dort einzustecken. Rückenseitig kann es vorteilhaft sein, einen kurzen Wandüberstand vorzusehen. Alternativ kann dort jedoch auch kein Wandüberstand vorgesehen sein. Dies führt dazu, dass das Gerät leichter über die Gleitplatte einer Trageeinheit geführt werden kann. Wenn unterhalb des Bodens kein Wandüberstand vorgesehen ist, kann das Gerät leicht gegenüber der Gleitplatte verkippt werden. Dies erleichtert die Lösung der Verbindungselemente. Es ist nicht leicht, ein sehr schweres Gerät mit der Hand präzise zu führen. Daher ist es günstig, wenn sich das Gerät möglichst frei verkippen lässt, bis es von den vorgesehenen Verbindungselementen eingefangen wird.

Aus diesen Überlegungen ergibt sich folgende nummerierte Liste von zweckmäßigen Ausführungsformen der Erfindung
1. Tragbare Geräteeinheit (100), welche ein Gerät (10) und eine Trageeinheit (50) umfasst, wobei die Trageeinheit (50) mindestens eine Gleitplatte (60) und mindestens einen Tragegurt (52, 54) aufweist, mit dem die Gleitplatte (60) getragen werden kann, wobei das Gerät (50) mindestens ein erstes Verbindungselement (20) und einen Tragegriff (12) mit einem Durchgriffsbereich (13) aufweist, und wobei die Gleitplatte (60) mindestens ein zweites Verbindungselement (62, 64) aufweist, welches mit dem ersten Verbindungselement (20) korrespondiert und die Verbindungselemente so ausgelegt sind, dass das Gerät (10) in einer Einschubrichtung aus einer Einschubposition in eine Stützposition und dann in eine Verbindungsposition gebracht werden kann und das Gerät (10) in der Stützposition in mindestens einer Bewegungsrichtung nicht frei beweglich ist, wobei die Gleitplatte (60) ein Halteelement (70) aufweist, welches eine Entnahme des Gerätes (10) gegen die Einschubrichtung hemmt, dadurch gekennzeichnet, dass das Halteelement (70) eine federnd vorgespannte Haltenase (72) und zur Bedienung ein Druckfeld (76) aufweist, das in dem Durchgriffsbereich (13) liegt.
2. Tragbare Geräteeinheit (100) nach Ausführungsform 1, bei welcher das Gerät (10) in der Stützposition parallel zur Ebene der Gleitplatte (60) nicht frei beweglich ist.
3. Tragbare Geräteeinheit (100) nach Ausführungsform 1 oder 2, bei welcher das Gerät (10) senkrecht nicht frei von der Gleitplatte (60) weg beweglich ist.
4. Tragbare Geräteeinheit (100) nach einer der vorhergehenden Ausführungsformen, welche zum Tragen auf dem Rücken ausgelegt ist.
5. Tragbare Geräteeinheit (100) nach einer der vorhergehenden Ausführungsformen, bei der das erste Verbindungselement (20) eine Grundplatte (26) und eine erste hinterschnittene Seitenkante (22) und eine zweite hinterschnittene Seitenkante (24) umfasst.
6. Tragbare Geräteeinheit (100) nach der vorherigen Ausführungsform, bei der die Seitenkanten (22,24) in Einschubrichtung konisch aufeinander zulaufen.
7. Tragbare Geräteeinheit (100) nach einer der vorgehenden Ausführungsformen, bei der das zweite Verbindungselement (62, 64) eine erste Führungsschiene (62) und eine zweite Führungsschiene (64) aufweist, welche jeweils ein gleitplattennahes Ende (88a, 88b) und ein gleitplattenfernes Ende (90a, 90b) aufweisen, wobei der Abstand zwischen den gleitplattenfernen Enden geringer ist als zwischen den gleitplattennahen Enden.
8. Tragbare Geräteeinheit(100) nach einer der vorhergehenden Ausführungsformen, wobei die erste Führungsschiene (62) und die zweite Führungsschiene (64) in Einschubrichtung des Gerätes (10) aufeinander zulaufen.
9. Tragbare Geräteeinheit (100) nach einer der vorherigen Ausführungsformen, bei der der Einschubweg in Einschubrichtung durch einen Stützblock (66) begrenzt wird.
10. Tragbare Geräteeinheit (100) nach einer der vorherigen Ausführungsformen, bei welcher zwei Schultergurte (52a, 52b) und ein Beckengurt (54) vorgesehen sind.
11. Tragbare Geräteeinheit (100) nach der vorherigen Ausführungsform, bei welcher der Beckengurt (54) an einem Querträger (56) verankert sind.
12. Tragbare Geräteeinheit (100) nach einer der vorhergehenden Ausführungsformen, bei der die Gleitplatte (60) aus Kunststoff hergestellt ist.
13. Tragbare Geräteeinheit (100) nach einer der vorhergehenden Ausführungsformen, bei der die erste Führungsschiene (62) und die zweite Führungsschiene (64) einstückig mit der Gleitplatte (60) ausgeführt sind.
14. Tragbare Geräteeinheit (100) nach einer der vorhergehenden Ausführungsformen, bei der das Gerät (10) ein Akkumulatorblock (10) ist.
15. Tragbare Geräteeinheit (100) nach der vorherigen Ausführungsform, bei der der Akkumulatorblock (10) mehrere Akkumulatorzellen umfasst.
16. Tragbare Geräteeinheit (100) nach der vorherigen Ausführungsform, bei der der Akkumulatorblock (10) eine variable Anzahl von Akkumulatorzellen umfassen kann.
17. Tragbare Geräteeinheit (100) nach einer der vorhergehenden Ausführungsformen, bei der das Gerät (10) kopflastig ist.
18. Tragbare Geräteeinheit (100) nach einer der vorhergehenden Ausführungsformen, bei welcher das Gerät (10) zwei Standfüße (18) aufweist und der Querträger (56) oder ein mit dem Querträger (56) verbundenes Element der Trageeinheit (50) einen dritten Standfuß oder ein drittes Standelement bildet.

Weitere Merkmale, aber auch Vorteile der Erfindung, ergeben sich aus den nachfolgend aufgeführten Zeichnungen und der zugehörigen Beschreibung. In den Abbildungen und in den dazugehörigen Beschreibungen sind Merkmale der Erfindung in Kombination beschrieben. Diese Merkmale können allerdings auch in anderen Kombinationen von einem erfindungsgemäßen Gegenstand umfasst werden. Jedes offenbarte Merkmal ist also auch als in technisch sinnvollen Kombinationen mit anderen Merkmalen offenbart zu betrachten, solange diese Kombinationen in den Anspruchsbereich fallen. Die Abbildungen sind teilweise leicht vereinfacht oder schematisch:
- Fig. 1: zeigt eine perspektivische Ansicht einer erfindungsgemäßen tragbaren Gerateeinheit, bei der Gerät und Trageeinheit miteinander verbunden sind.
- Fig. 2: zeigt eine perspektivische Ansicht einer erfindungsgemäßen tragbaren Geräteeinheit, bei der Gerät und Trageeinheit voneinander getrennt sind.
- Fig. 3: zeigt die dem Gerät zugewandte Seite einer Gleitplatte, die Teil der Trageeinheit ist.
- Fig. 4: zeigt die dem Rücken des Trägers zugewandte Seite einer Gleitplatte, die Teil der Trageeinheit ist.
- Fig. 5: zeigt einen Querschnitt durch die Gleitplatte
- Fig. 6: zeigt die dem Träger zugewandte Seite eines Gerätes in Form eines Akkumulatorblocks.
- Fig. 7: zeigt den Boden eiries Gerätes in Form eines Akkumulatorblocks.

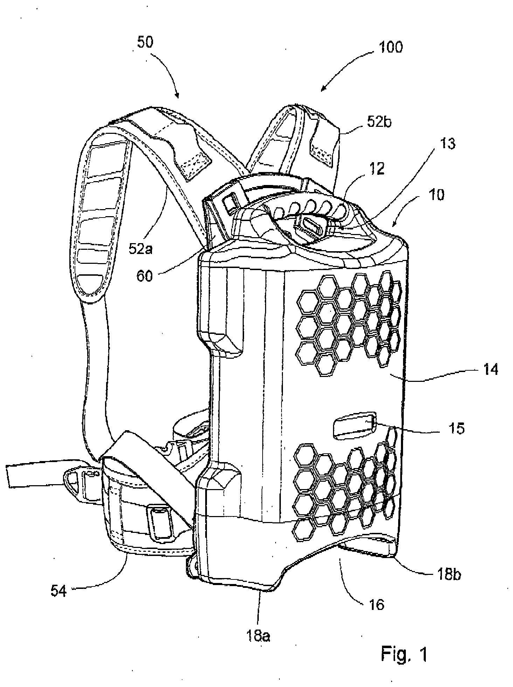

Fig. 1 zeigt in perspektivischer Ansicht eine erfindungsgemäße Geräteeinheit 100. Das Gerät wird in der Form eines Akkumulatorblocks 10 zur Verfügung gestellt. In diesem Block befindet sich eine Anzahl von ladbaren Akkumulatorzellen. An seiner Oberseite weist der Akkumulatorblock 10 einen Tragegriff 12 auf. Zwischen Tragegriff 12 und Gehäuse 14 des Akkumulatorblocks 10 befindet sich der Durchgriffsbereich 13. Wird eine Hand durch den Durchgriffsbereich 13 geführt, so kann der Tragegriff 12 bequem umschlossen werden. Der Akkumulatorblock 10 weist ferner eine Anzeige 15 auf, welche z. B. den Ladestand anzeigen kann. An der Unterseite des Gehäuses 14 ist ein Bedienfeld 16 vorgesehen. Dieses Bedienfeld 16 kann einen Ein-/Ausschalter umfassen. Ferner können dort Anschlüsse für elektrische Geräte vorgesehen sein, die mit dem Akkumulatorblock 10 betrieben werden sollen. An der Unterseite des Gehäuses 14 befinden sich links und rechts Standfüße, nämlich ein erster Standfuß 18a und ein zweiter Standfuß 18b.

Der Akkumulatorblock 10 ist fest mit einer Trageeinheit 50 verbunden. Diese Trageeinheit 50 weist einen ersten Schultergurt 52a und einen zweiten Schultergurt 52b auf. Sie weist ferner einen Beckengurt 54 auf. Diese Gurte sind (direkt oder indirekt) mit der Gleitplatte 60 verbunden. Über diese Gleitplatte 60 kann die Verbindung der Trageeinheit 50 zum Akkumulatorblock 10 hergestellt werden.

Man erkennt in Fig. 1 einen Vorteil der gewählten Anordnung: Wenn der Akkumulatorblock 10 mit seinen Standfüßen 18a und 18b auf einer Fläche abgestellt wird, so befindet sich der Beckengurt 54 etwa in Höhe der Fläche. In dieser Weise unterstützt der Beckengurt 54 (oder die mit ihm verbundenen Elemente) den sicheren Stand der Geräteeinheit 100. Im Rahmen der vorliegenden Erfindung kann es allgemein zweckmäßig sein, den Beckengurt 54 oder mit ihm verbundenen Teile (wie z.B. den in der folgenden Abbildungen sichtbarten Querträger 58 für den Beckengurt) knapp (ca. 1 bis 10 cm) oberhalb der durch Standfüße des Gerätes festgelegten Standfläche anzuordnen.

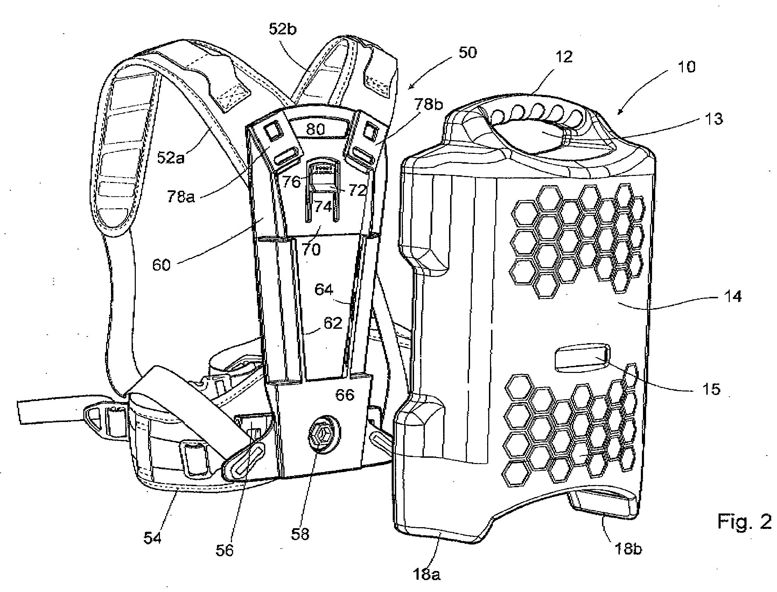

Fig. 2 zeigt dieselbe Geräteeinheit 100 in einer anderen Konfiguration. In dieser Konfiguration ist der Akkumulatorblock 10 von der Trageeinheit 50 abgenommen. Man erkennt also zwei selbstständige Einheiten.

In dieser Zeichnung wird der Aufbau der Trageeinheit 50 im Rückenbereich noch deutlicher. Zentrales Element ist die Gleitplatte 60. Im unteren Bereich der Gleitplatte 60 ist ein Gelenk 58 vorgesehen. Dieses Gelenk 58 verbindet die Gleitplatte 60 mit dem Querträger 56. Der Querträger 56 dient zur Verbindung mit dem Beckengurt 54. Der Beckengurt 54 ist durch das Gelenk 58 beweglich zur Gleitplatte 60 gestaltet, was große ergonomische Vorteile hat.

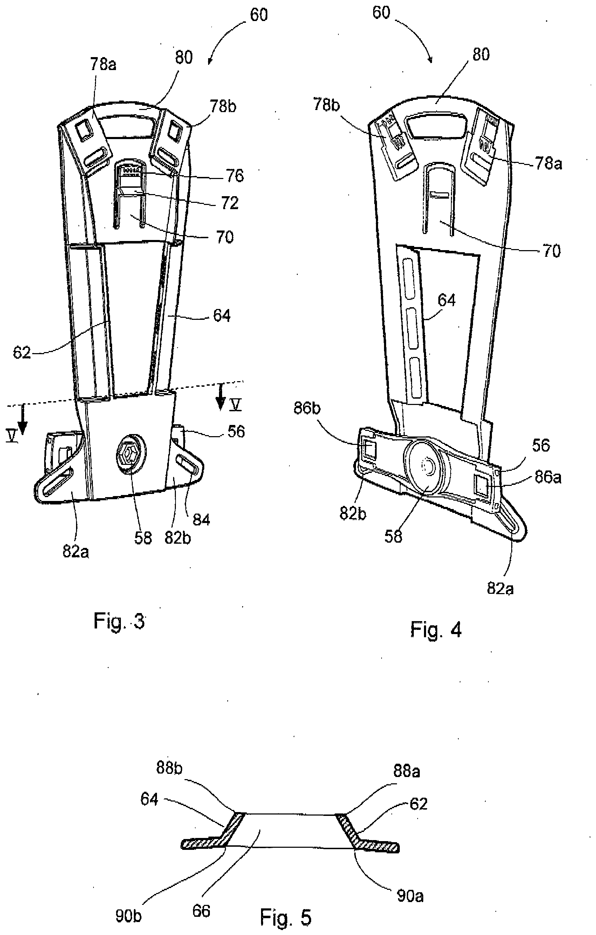

Die Gleitplatte 60 weist eine erste Führungsschiene 62 und eine zweite Führungsschiene 64 auf. Diese laufen nach unten konisch aufeinander zu. Sie enden am Stützblock 66. Die beiden Schienen 62, 64 dienen als zweites Verbindungselement. Sie können ein entsprechendes erstes Verbindungselement führen oder in einigen Ausführungsformen auch umgreifen. Eine formschlüssige Verbindung mit einem geeigneten ersten Verbindungselement kann zum einen dadurch erreicht werden, dass das konische Zulaufen der beiden Führungsschienen 62, 64 ausgenutzt wird. Zusätzlich sind beide Schienen 62, 64 auch in der Welse schräg gestellt, dass ihre gleitplattennahen Enden eine größere Distanz als ihre gleitplattenfernen Enden haben. (Dies wird aus Fig. 5 noch näher erkennbar.)

Zwischen den beiden Führungsschienen 62, 64 ist in der Gleitplatte 60 eine Ausnehmung vorgesehen. Eine solche Ausnehmung vorzusehen hat Gewichtsvorteile, ist aber nicht in jedem Fall erforderlich.

Oberhalb der Führungsschienen 62, 64 ist ein Halteelement 70 vorgesehen. Dieses Halteelement 70 weist die Haltenase 72 auf, welche durch den Steg 74 getragen wird. Der Steg 74 endet mit einem Druckfeld 76. Das Halteelement 70 kann am bequemsten in eine Löseposition überführt werden, wenn auf das Druckfeld 76 gedrückt wird. Es kann dazu Noppen, eine Riffelung oder dergleichen aufzuweisen.

Am oberen Ende der Gleitplatte 70 sind Schultergurtaufnahmen 78 vorgesehen, welche einen Schultergurt oder sonstige Tragegurte aufnehmen können. In diesem Bereich ist ferner ein Griff 80 vorgesehen.

Fig. 3 zeigt eine erfindungsgemäße Gleitplatte 60 in perspektivischer Ansicht, wobei der Blick im Wesentlichen aus der Geräterichtung erfolgt. Man erkennt in dieser Ansicht besonders gut, dass im unteren Bereich der Gleitplatte 60 Ankerstege 82a und 82b vorgesehen sind. Diese Ankerstege 82a, 82b weisen Ankerstützen 84a und 84b auf. Diese Ankerstützen 84a, 84b können die Enden der Schultergurte aufnehmen. Es hat sich als vorteilhaft erwiesen, solche Ankerstege 82a, 82b etwa in Höhe des Beckengurtes und um mindestens 5 cm, vorzugsweise 10 cm oder 15 cm, seitlich beabstandet von der Mittellinie der Gleitplatte 60 vorzusehen.

Fig. 4 zeigt eine ähnliche perspektivische Ansicht der gleichen Gleitplatte 60, diesmal jedoch aus der Blickrichtung des Tragesystems. Man erkennt hier besonders gut, dass der Querträger 56 für den Beckengurt durch das Vorsehen des Gelenkes 58 frei zur Gleitplatte 60 beweglich Ist. An den Enden des Querträgers 56 sind Beckengurtaufnahmen 86a und 86b vorgesehen. Ebenfalls gut erkennbar ist in dieser Ansicht, dass die Gestaltung der Gleitplatte 60 zur Standfestigkeit der Geräteeinheit 100 insgesamt beitragen kann. Beispielsweise lassen sich die Ankerstege 82 entsprechend gestalten. Dazu könnten die Ankerstege 62 mit zusätzlichen Stützen oder Standfüßen ausgestattet werden. Ebenfalls wäre es denkbar, den Querträger 56 mit zusätzlichen Stützen oder Standfüßen auszustatten.

Fig. 5 zeigt einen in der in Fig. 3 bezeichneten Weise geführten waagerechten Schnitt durch die Gleitplatte 60. Aus dieser Perspektive ist deutlich zu erkennen, dass die Führungsschienen 62, 64 ein entsprechendes erstes Verbindungselement gut umgreifen können. Die Führungsschienen 62, 64 weisen jeweils ein gleitpiattennahes und ein gleitplattenfernes Ende auf. Beispielsweise weist die erste Führungsschiene 62 ein gleitplattenfernes Ende 88a und ein gleitplattennahes Ende 90a auf Die zweite Führungsschiene 64 weist ein gleitplattenfernes Ende 88b und ein gleitplattennahes Ende 90b auf. In diesem Schnittbild ist der Abstand zwischen den gleitplattenfernen Enden 88a und 88b geringer als der Abstand zwischen den gleitplattennahen Enden 90a und 90b. Die Führungsschienen 62, 64 werden vorteilhafterweise so gestaltet, dass dies in mehreren parallelen oder auch allen parallelen Schnittebenen der Fall ist.

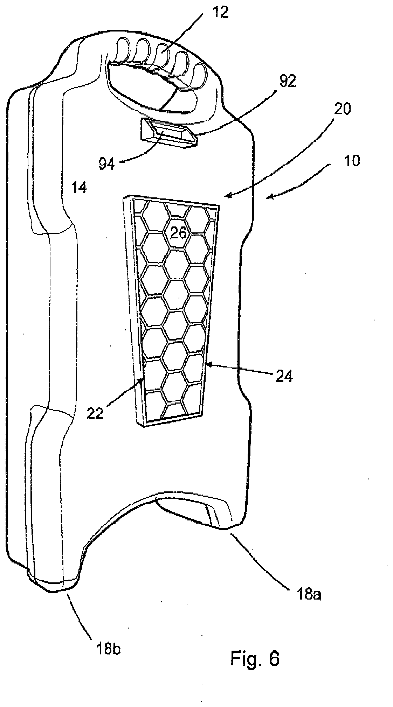

Fig. 6 zeigt in einer perspektivischen Ansicht im Wesentlichen die dem der Trageeinheit zugewandte Seite des Akkumulatorblocks 10. Oben erkennt man wiederum den Tragegriff 12 und unten die Standfüße 18a und 18b. Auf dem Gehäuse 14 ist ein erstes Verbindungselement 20 angebracht. Dieses Verbindungselement kann integral mit dem Gehäuse 14 sein oder es kann ein separates lösbares Bauteil sein. Das Verbindungselement weist eine erste Greifkante 22 und eine zweite Greifkante 24 auf. Die Greifkanten 22, 24 bilden die Kanten einer Grundplatte 26. Die Greifkanten 22, 24 laufen konisch aufeinander zu, so dass die Grundplatte die Form eines stumpfen Dreiecks beschreibt, dessen stumpfe Spitze in Einschubrichtung weist. Diese konische Form erlaubt bereits eine Verbindung mit einem korrespondierenden Greifelement, d. h. mit den beiden Führungsschienen 62 und 64. Zusätzlich sind die erste Greifkante 22 und die zweite Greifkante 24 hinterschnitten. Dieser Hinterschnitt ist so ausgeführt, dass eine zusätzliche Fixierung durch das konische Zulaufen der Führungsschienen 62, 64 in der Fig. 5 dargestellten Ebene erfolgt.

Im Bereich des Gehäuses des Akkumulatorblocks 10, das der Trageeinheit zugewandt ist, ist eine Fixiervorrichtung 92 vorgesehen. Diese kann mit dem dem Halteelement 70 zusammenwirken. Dazu ist an der Fixiervorrichtung 92 eine Vertiefung in Form einer Fixiernut 94 vorgesehen. Die Haltenase 72 kann in die Fixiernut 94 eingreifen. Wenn es vorteilhaft erschient, könnte eine Nut auch als bloße Vertiefung in der Rückwand des Gehäuses 14 vorgesehen werden.

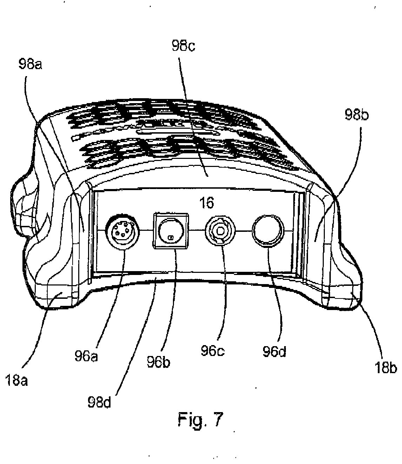

Fig. 7 zeigt in einer perspektivischen Ansicht im Wesentlichen die Unterseite des Akkumulatorblocks 10.

Die Gestaltung der Unterseite des Gerätes stellt einen selbstständigen Aspekt der Erfindung dar. Es hat sich als vorteilhaft erwiesen, das Gehäuse 14 mit einem Boden auszustatten, über den gewisse Elemente jedoch hinausragen. Der Boden selbst kann in zweckmäßigerweise als Bedienfeld 16 gestaltet werden. Unter einem Bedienfeld 16 ist in der Regel auch ein Bedien- und Anschlussfeld zu verstehen. Elemente, die sich über das Niveau des Bedienfeldes16 erheben, werden im obigen Sinne als hinausragend und bezogen auf die Seitenwände als Seitenwandüberstand bezeichnet.

Das Bedienfeld weist die elektrischen Anschlüsse 96a, 96c und 96d auf. Es weist ferner den Ein-/Ausschalter 96b auf. Zu beiden Seiten ragen die Seitenwände des Gehäuses 14 über das Bedienfeld 16 hinaus. In dieser Weise werden die Seitenwandüberstände 98a und 98b gebildet. Diese gehen in die Standfüße 18a und 18b über. Zum einen lassen sich also die Seitenwandüberstände leicht zur Bildung von Standfüßen nutzen, zum anderen sorgen sie für den seitlichen Schutz des empflichen Elemente des Bedienfeldes. Dabei werden sowohl die elektrischen Anschlüsse geschützt, als auch die Enden und Stecker von Kabeln, die mit diesen Anschlüssen verbunden werden können.

An der dem Träger abgewandte Wand des Gehäuses 14 ist nur ein sehr kurzer Seitenwandüberstand 98c ausgebildet. Es könnte auch auf einen Seitenwandüberstand verzichtet werden. Dies sichert die gute Zugänglichkeit des Bedienfeldes 16.

An der dem Träger zugewandten Wand des Gehäuses 14 ist nur ein kurzer Seitenwandüberstand 98d ausgebildet (der jedoch zumindest abschnittweise etwas länger ist als der gegenüberliegende Seitenwandüberstand 98c). Ein solcher Seitenwandüberstand kann grundsätzlich einteilig mit dem Gehäuse ausgebildet sein oder als separates Bauteil. Als separates Bauteil kann er auch abnehmbar sein. Dass der Seitenwandüberstand 98c kurz ist, führt dazu, dass das Gerät leichter über die Gleitplatte 60 einer Trageeinheit 50 geführt werden kann. Weil unterhalb des Bodens kein langer Wandüberstand vorgesehen ist, kann das Gerät leicht gegenüber der Gleitplatte 60 verkippt werden. Dies erleichtert die Lösung der Verbindungselemente. Es ist nicht leicht, ein sehr schweres Gerät mit der Hand präzise zu führen. Daher ist es günstig, wenn sich das Gerät möglichst frei abwinkeln oder verkippen lässt, bis es von den vorgesehenen Verbindungselementen eingefangen wird.

Die vorangegangene Beschreibung und die zugehörigen Abbildungen haben deutlich gemacht, wie sich in zweckmäßigerweise eine Geräteeinheit 100 herstellen lässt, bei der mit einer Trageeinheit 50 in sehr sicherer und ergonomisch günstiger Weise ein Gerät, beispielsweise ein Akkumulatorblock 10, am Körper transportiert werden kann.

### Bezugszeichenliste

- 100: Geräteeinheit
- 10: Akkumulatorblock
- 12: Tragegriff
- 13: Durchgriffsbereich
- 14: Gehäuse
- 15: Anzeige
- 16: Bedienfeld
- 18: Standfuß
- 20: erstes Verbindungselement
- 22: erste Greifkante
- 24: zweite Greifkante
- 26: Grundplatte
- 50: Trageeinheit
- 52: Schultergurt
- 54: Beckengurt
- 56: Querträger
- 58: Gelenk
- 60: Gleitplatte
- 62: erste Führungsschiene
- 64: zweite Führungsschiene
- 66: Stützblock
- 68: Schnalle
- 70: Halteelement
- 72: Haltenase
- 74: Steg
- 76: Druckfeld
- 78: Schultergurtaufnahmen
- 80: Griff
- 82: Ankerstege
- 84: Ankerschlitze
- 86: Beckengurtaufnahmen
- 88: gleitplattenfernes Ende
- 90: gleitplattennahes Ende
- 92: Fixiervorrichtung
- 94: Fixiernut
- 96: Bedienelemente
- 98: Wand überstand

## Patentansprüche

1. Tragbare Geräteeinheit (100), welche ein Gerät (10) und eine Trageeinheit (50) umfasst, wobei die Trageeinheit (50) mindestens eine Gleitplatte (60) und mindestens einen Tragegurt (52, 54) aufweist, mit dem die Gleitplatte (60) getragen werden kann, wobei das Gerät (50) mindestens ein erstes Verbindungselement (20) und einen Tragegriff (12) mit einem Durchgriffsbereich (13) aufweist, und wobei die Gleitplatte (60) mindestens ein zweites Verbindungselement (62, 64) aufweist, welches mit dem ersten Verbindungselement (20) korrespondiert und die Verbindungselemente so ausgelegt sind, dass das Gerät (10) in einer Einschubrichtung aus einer Einschubposition in eine Stützposition und dann in eine Verbindungsposition gebracht werden kann und das Gerät (10) in der Stützposition in mindestens einer Bewegungsrichtung nicht frei beweglich ist, wobei die Gleitplatte (60) ein Halteelement (70) aufweist, welches eine Entnahme des Gerätes (10) gegen die Einschubrichtung hemmt,
**dadurch gekennzeichnet, dass**
das Halteelement (70) eine federnd vorgespannte Haltenase (72) und zur Bedienung ein Druckfeld (76) aufweist, das in dem Durchgriffsbereich (13) liegt.

2. Tragbare Geräteeinheit (100) nach Anspruch 1, bei welcher das Gerät (10) in der Stützposition parallel zur Ebene der Gleitplatte (60) nicht frei beweglich ist.

3. Tragbare Geräteeinheit (100) nach Anspruch 1 oder 2, bei welcher das Gerät (10) in der Stützposition senkrecht nicht frei von der Gleitplatte (60) weg beweglich ist.

4. Tragbare Geräteeinheit (100) nach einem der vorhergehenden Ansprüche, bei der das erste Verbindungselement (20) eine Grundplatte (26) und eine erste hinterschnittene Seitenkante (22) und eine zweite hinterschnittene Seitenkante (24) umfasst.

5. Tragbare Geräteeinheit (100) nach dem vorherigen Anspruch, bei der die Seitenkanten (22,24) in Einschubrichtung konisch aufeinander zulaufen.

6. Tragbare Geräteeinheit (100) nach einem der vorgehenden Ansprüche, bei der das zweite Verbindungselement (62, 64) eine erste Führungsschiene (62) und eine zweite Führungsschiene (64) aufweist, welche jeweils ein gleitplattennahes Ende (88a, 88b) und ein gleitplattenfernes Ende (90a, 90b) aufweisen, wobei der Abstand zwischen den gleitplattenfernen Enden geringer ist als zwischen den gleitplattennahen Enden.

7. Tragbare Geräteeinheit (100) nach einem der vorherigen Ansprüche, bei der der Einschubweg in Einschubrichtung durch einen Stützblock (66) begrenzt wird.

8. Tragbare Geräteeinheit (100) nach einem der vorherigen Ansprüche, bei welcher zwei Schultergurte (52a, 52b) und ein Beckengurt (54) vorgesehen sind.

9. Tragbare Geräteeinheit (100) nach dem vorherigen Anspruch, bei welcher der Beckengurt (54) an einem Querträger (56) verankert sind.

10. Tragbare Geräteeinheit (100) nach einem der vorhergehenden Ansprüche, bei der das Gerät (10) ein Akkumulatorblock (10) ist.

11. Tragbare Geräteeinheit (100) nach dem vorherigen Anspruch, bei der der Akkumulatorblock (10) eine variable Anzahl von Akkumulatorzellen umfassen kann.

12. Tragbare Geräteeinheit (100) nach einem Ansprüche 9 bis 11, bei welcher das Gerät (10) zwei Standfüße (18) aufweist und der Querträger (56) oder ein mit dem Querträger (56) verbundenes Element der Trageeinheit (50) einen dritten Standfuß oder ein drittes Standelement bildet.

13. Verfahren zur Verbindung eines Gerätes (10) mit einer Trageeinheit (50) zu einer tragbaren Geräteeinheit nach einem der vorangehenden Ansprüche, welches, vorzugsweise in dieser Reihenfolge, folgende Schritte umfasst:
- Bereitstellen des Gerätes und der Trageeinheit;
- Bewegen des Gerätes entlang einer Einschubrichtung auf die Trageeinheit hin;
- Überführen des Gerätes in eine Einschubposition, wobei das Gerät in der Einschubposition noch nicht mit der Trageeinheit verbunden ist;
- Überführen des Gerätes von der Einschubposition in eine Stützposition, wobei das Gerät in der Stützposition in mindestens einer Bewegungsrichtung nicht frei beweglich ist;
- Überführen des Gerätes von der Stützposition in eine Verbindungsposition, in welcher das Gerät einsatzbereit mit der Trageeinheit verbunden ist.

## Claims

1. Portable appliance unit (100) which comprises an appliance (10) and a carrying unit (50), wherein the carrying unit (50) has at least one sliding plate (60) and at least one carrying strap (52, 54) by which the sliding plate (60) can be carried, wherein the appliance (50) has at least one first connecting element (20) and a carrying handle (12) with a reach-through field (13), and wherein the sliding plate (60) has at least one second connecting element (62, 64) which corresponds with the first connecting element (20), and the connecting elements are configured so that the appliance (10) can be brought in a direction of insertion from an insertion position into a support position and then into a connection position, and the appliance (10) is in the support position not freely movable in at least a direction of movement, wherein the sliding plate (60) has a retaining element (70) which inhibits a removal of the appliance (10) against the direction of insertion,
**characterized in that**
the retaining element (70) has a spring-loaded retaining nose (72) and a press field (76) for operating that lies in the reach-through field (13).

2. Portable appliance unit (100) according to claim 1, wherein the appliance (10) is not freely movable parallel to the plane of the sliding plate (60) in the support position.

3. Portable appliance unit (100) according to claim 1 or 2, wherein the appliance (10) is not freely removable vertically from the sliding plate (60)in the support position.

4. Portable appliance unit (100) according to one of the preceding claims, wherein the first connecting element (20) comprises a base plate (26) and a first undercut side edge (22) and a second undercut side edge (24).

5. Portable appliance unit (100) according to the preceding claim, wherein the side edges (22,24) approach each other conically in direction of insertion.

6. Portable appliance unit (100) according to one of the preceding claims, wherein the second connecting element (62, 64) has a first guide rail (62) and a second guide rail (64) which respectively have a sliding plate near end (88a, 88b) and a sliding plate far end (90a, 90b), wherein the distance between the sliding plate far ends is smaller than between the sliding plate near ends.

7. Portable appliance unit (100) according to one of the preceding claims, wherein the path of insertion is limited by a support block (66) in the direction of insertion.

8. Portable appliance unit (100) according to one of the preceding claims, wherein two shoulder straps (52a, 52b) and a pelvis strap (54) are provided.

9. Portable appliance unit (100) according to the preceding claim, wherein the pelvis strap (54) are fastened at a cross member (56).

10. Portable appliance unit (100) according to one of the preceding claims, wherein the appliance (10) is an accumulator block (10).

11. Portable appliance unit (100) according to the preceding claim, wherein the accumulator block (10) may comprise a variable number of accumulator cells.

12. Portable appliance unit (100) according to one of claims 9 to 11, wherein the appliance (10) has two feet (18) and the cross member (56) or an element of the carrying unit (50) connected with the cross member (56) is a third foot or a third stand element.

13. Method for connecting an appliance (10) with a carrying unit (50) to a portable appliance unit according to one of the preceding claims, which comprises the following steps, preferably in this sequence:
- providing the appliance and the carrying unit;
- moving the appliance along a direction of insertion towards the carrying unit;
- transferring the appliance into a insertion position wherein the appliance is not yet connected with the carrying unit in the insertion position;
- transferring the appliance from the insertion position into a support position, wherein the appliance is not freely movable in at least one direction of movement in the support position;
- transferring the appliance from the support position into a connection position, wherein the appliance is connected with the carrying unit ready for operation.

## Revendications

1. Unité d'équipement portatif (100) qui comprend un équipement (10) et une unité porteuse (50), dans laquelle l'unité porteuse (50) présente au moins une plaque de coulissement (60) et au moins une sangle de transport (52, 54) avec laquelle la plaque de coulissement (60) peut être portée, dans laquelle l'équipement (50) présente au moins un premier élément de liaison (20) et une poignée de transport (12) avec une zone de traversée (13), et dans laquelle la plaque de coulissement (60) présente au moins un deuxième élément de liaison (62, 64) qui correspond au premier élément de liaison (20) et les éléments de liaison sont étudiés de telle sorte que l'on peut faire passer l'équipement (10) dans une direction d'insertion d'une position d'insertion dans une position de support et ensuite dans une position de liaison et que dans la position de support, l'équipement (10) ne peut pas se mouvoir librement dans au moins une direction de mouvement, dans laquelle la plaque de coulissement (60) présente un élément de retenue (70) qui inhibe un retrait de l'équipement (10) à l'encontre de la direction d'insertion,
**caractérisée en ce que** l'élément de retenue (70) présente un bec de retenue précontraint élastiquement (72) et un champ de pression (76) pour la manipulation, lequel se situe dans la zone de traversée (13).

2. Unité d'équipement portatif (100) selon la revendication 1, dans laquelle, dans la position de support, l'équipement (10) ne peut pas se mouvoir librement parallèlement au plan de la plaque de coulissement (60).

3. Unité d'équipement portatif (100) selon la revendication 1 ou 2, dans laquelle, dans la position de support, l'équipement (10) ne peut pas se mouvoir librement de façon perpendiculaire en éloignement de la plaque de coulissement (60).

4. Unité d'équipement portatif (100) selon l'une des revendications précédentes, dans laquelle le premier élément de liaison (20) comprend une plaque de base (26) et une première arête latérale en contre-dépouille (22) et une deuxième arête latérale en contre-dépouille (24).

5. Unité d'équipement portatif (100) selon la revendication précédente, dans laquelle les arêtes latérales (22, 24) convergent l'une vers l'autre de manière conique en direction d'insertion.

6. Unité d'équipement portatif (100) selon l'une des revendications précédentes, dans laquelle le deuxième élément de liaison (62, 64) présente un premier rail de guidage (62) et un deuxième rail de guidage (64), lesquels présentent respectivement une extrémité proche de la plaque de coulissement (88a, 88b) et une extrémité éloignée de la plaque de coulissement (90a, 90b), dans laquelle la distance entre les extrémités éloignées de la plaque de coulissement (90a, 90b) est plus petite qu'entre les extrémités proches de la plaque de coulissement.

7. Unité d'équipement portatif (100) selon l'une des revendications précédentes, dans laquelle le trajet d'insertion en direction d'insertion est délimité par un bloc de support (66).

8. Unité d'équipement portatif (100) selon l'une des revendications précédentes, dans laquelle deux sangles d'épaule (52a, 52b) et une sangle sous-abdominale (54) sont prévues.

9. Unité d'équipement portatif (100) selon la revendication précédente, dans laquelle la sangle sous-abdominale (54) est ancrée au niveau d'un support transversal (56).

10. Unité d'équipement portatif (100) selon l'une des revendications précédentes, dans laquelle l'équipement (10) est un bloc accumulateur (10).

11. Unité d'équipement portatif (100) selon la revendication précédente, dans laquelle le bloc accumulateur (10) peut comprendre un nombre variable d'éléments d'accumulateur.

12. Unité d'équipement portatif (100) selon l'une des revendications 9 à 11, dans laquelle l'équipement (10) présente deux pieds de support (18), et le support transversal (56), ou un élément de l'unité porteuse (50) relié au support transversal (56), forme un troisième pied de support ou un troisième élément de support.

13. Procédé pour relier un équipement (10) à une unité porteuse (50) pour donner une unité d'équipement portative selon l'une des revendications précédentes, lequel comprend les étapes suivantes, de préférence dans l'ordre suivant :
- mettre à disposition l'équipement et l'unité porteuse ;
- faire bouger l'équipement le long d'une direction d'insertion vers l'unité porteuse ;
- faire passer l'équipement dans une position d'insertion, dans lequel, dans la position d'insertion, l'équipement n'est pas encore relié à l'unité porteuse ;
- faire passer l'équipement de la position d'insertion dans une position de support, dans lequel, dans la position de support, l'équipement ne peut pas se mouvoir librement dans au moins une direction de mouvement ;
- faire passer l'équipement de la position de support dans une position de liaison dans laquelle l'équipement est relié de manière opérationnelle à l'unité porteuse.
